# EUROPEAN PATENT SPECIFICATION

(11) **EP 1 322 180 B1**
(45) Date of publication and mention of the grant of the patent: **25.10.2006**
(21) Application number: 01969683.0
(22) Date of filing: 30.08.2001
(51) Int. Cl.: A23L 1/22, A23L 1/222

(54) **Process for preparing an edible composition comprising a fat phase, vegetable matter and salt**
Verfahren zur Herstellung einer Zusammensetzung enthaltend eine Fettphase, pflanzliches Material und Salz
Procédé de production d'une composition comprenant une phase grasse, des matières végétales et du sel

(30) Priority: 26.09.2000 EP 00308440
(43) Date of publication of application: 02.07.2003
(73) Proprietor: UNILEVER N.V., 3013 AL Rotterdam (NL); UNILEVER PLC, London, Greater London EC4P 4BQ (GB)
(72) Inventor: PALMER, Alan Edward Unilever Research Vlaardingen, NL-3133 AT Vlaardingen (NL); VERHOEF, Nicolaas, Unilever Research Vlaardingen, NL-3133 AT Vlaardingen (NL)
(74) Representative: Wurfbain, Gilles L.
(86) International application number: PCT/EP2001/010097
(87) International publication number: WO 2002/026051

(56) References cited:
- EP-A- 0 396 810
- EP-A- 0 775 444
- WO-A-98/47386
- FR-A- 2 594 006
- FR-A- 2 731 321
- GB-A- 2 014 429
- US-A- 4 572 836
- DATABASE WPI Section Ch, Week 199739 Derwent Publications Ltd., London, GB; Class D13, AN 1997-416466 XP002162952 & CN 1 114 155 A (YAN J), 3 January 1996 (1996-01-03)
- PATENT ABSTRACTS OF JAPAN vol. 010, no. 269 (C-372), 12 September 1986 (1986-09-12) & JP 61 092547 A (HIDEO KOKUBO), 10 May 1986 (1986-05-10)

## Description

### Field of the invention

The present invention relates to a process for preparing edible compositions containing a fat phase and vegetable matter, such as onions, garlic, carrots, peppers, herbs, or mixtures thereof.

### Background of the invention

Vegetable matter such as onions, garlic, carrots, peppers, herbs and mixtures thereof are used in many different dishes to provide flavour, either fresh/raw or in (freshly) fried form. Unfortunately, such fresh products are not always available, and dried or deep frozen vegetable preparations are used. These preparations offer inferior quality, and solutions have been proposed to overcome this. For example, in US 4,572,836 edible sterilised herb compositions are disclosed, in which the herbs are presented in the form of a puree or paste of the (otherwise fresh) herbs in oil. Oil is present in 25-50%, herbs in amounts of 40-65%, and the compositions further contain salt, preservative and acid.

With respect to onions, frying diced or sliced onions form usually the start of the preparation of many dishes, e.g. by frying or simmering, prior to mixing in e.g. meat, other vegetables, stock, thickeners or mixtures thereof. This requires the need for cutting or chopping onions, which can be perceived as burdensome and a nasty task due to the aromas liberated. The same applies for other members of the botanical genus of Allium, such as garlic. Hence, there is a need for compositions that provide onions (or other members of the genus Allium) that are already cut in slices or chopped in dices, and preferably, the onions should have an appearance close to freshly cut or chopped onions (i.e. preferably not fully dried, pre-fried or frozen). Furthermore, it is preferred that the product is ambient stable. As solution to this, formulations have been marketed that contain chopped, fresh (or nearly fresh) onions in admixture with oil or fat, and some of the compositions do further contain preservatives and/or salt. Salt may act as preservative and/or flavour enhancing agent. Such compositions are easy in use, as the oil (in which onions are usually fried) is already present in the composition, and simply dosing the oil/onion mix in the frying pan is sufficient to start preparing the dish by frying or simmering.

Although the solutions that have been developed and are discussed above solve some of the problems involved, drawbacks are still present. This is in particular the case for formulations containing large amounts of onions. Freshly cut or chopped onions contain considerable amounts of water; part of which is released when such chopped onions are stored, e.g. in oil or fat. This appears in particular when next to onions and oil also salt is present. The first few percent of water will remain not or hardly visible, but if more water is released a layer of water may separate, which is unattractive. This is the same to a variable degree for other vegetable matter (that may be used in stead of or next to the onions) as well, such as garlic, carrots and peppers.

### Summary of the invention

Hence, there is a need for a composition that provides vegetable matter such as onions, garlic, carrots, peppers, herbs, or mixtures thereof in oil or fat, preferably in admixture with salt, which compositions show limited or no phase separation during several weeks or months upon storage.

It has now been found that the above may be achieved (at least in part) by a process for preparing an edible composition comprising vegetable matter, a fat phase and salt, which process comprises the following steps:
- cutting vegetable matter into slices, dices or other particulate form,
- adding part or all of the salt optionally followed by mixing,
- remove (part of) the water from the vegetable particles/salt mixture,
- mixing the so-obtained salted vegetable matter with the fat phase,
and wherein the amount of water removed is 0.1-60% (wt) based on the vegetable particles/salt mixture, prior to water removal.

In the above, the water liberated from the cut/sliced/diced vegetable matter which is subsequently removed is not true water, but an aqueous liquid containing salt, cellular contents of the vegetable matter, cell debris and other matter. For the purpose of this invention this is referred to as 'water'.

In such process, the water is preferably removed using centrifugation.

A process according to this invention may yield an edible composition comprising (wt %):
- fat phase: 10 -60%
- partly dehydrated vegetable matter 35 -85%
- salt 0.05-40%
wherein the fat phase comprises 20%wt of solid fat, wherein the vegetable matter comprises at least 50% wt of plants from the botanical genus of Allium and wherein said composition shows water separation of less than 5%,
preferably less than 3% (vol/vol) water when stored for 6 weeks under ambient conditions.

### Detailed description of the invention

For enhanced physical stability of the composition prepared according to the invention, the oil or fat used may contain 0.1-20% (based on the total amount of oil or fat present) of fat solid at room temperature, preferably hardstock fat crystals such as RP70 or RPh70. More preferably this amount is 1-10%. The fat phase may further contain other components in small amounts, like lecithin 0.01-3% as anti-spatter agent.

The vegetable matter comprises at least 50% by weight of onions or other member of the botanical genus Allium, such as garlic, leek, shallots, chives, mixtures thereof, etcetera.

The amount of salt in the compositions prepared invention is preferably 0.05-30% (wt), more preferably 2-25% (wt) or less than 20% (wt). The amount of fat phase is preferably 20-40% (wt). The amount of vegetable matter is preferably 50-75% (wt). Usually, the salt will be ordinary kitchen salt (ie. NaCl), although other matter normally used in kitchen salt such as iodine and iodine compounds may be present as well. Also, part of the salt may be another salt than NaCl, such as KCl.

The compositions prepared according to the invention preferably have a closed, ambient stable shelf life of at least 6 weeks.

For compositions prepared according to the invention which are used in relatively small amounts (e.g. one or a few spoonfulls) as part of an entire dish for 4 persons, the amount of total salt in the total composition according to the invention may be high (as the salt is "diluted" by the remainder of the dinner), which is to the benefit of microbial stability.

However, depending upon local culture, habit and taste the composition according to the invention may also be used in larger amounts, e.g. 300 g for a dinner for 4 persons. In such a case, less salt is desired (e.g. 1-8% wt). This may affect the microbial stability, and may necessitate subjecting the composition according to the invention to further preservation treatments, such as pasteurisation or sterilisation.

In the process as presently claimed all or part of the water liberated from the vegetable matter may be removed, but additional measures to avoid the appearance of a water layer may also be taken next to water removal, such as the addition of a water-binding agent (e.g. in an amount of 0.5-3% (wt)). The water-binding agent is preferably a thickener. Most preferred thickeners are gums, starch, starch derivatives or mixtures thereof. Hydrolysed starches are not preferred starch derivatives according to this invention.

The invention is in particular suitable when the vegetable matter is present in a particulate form (i.e. particles exceeding in size 1x1x1 mm), or solid mass such as slices, although part of the vegetable matter may be present as puree. The vegetable matter is preferably fresh or in a form that resembles fresh vegetable matter, as opposite to fully dried or fully cooked vegetable matter. Nevertheless, it may be preferred to have some pre-treatment of the vegetable matter, which may include a blanching operation or removing part of the water content. However, it is preferred that such vegetable matter itself (i.e. inside vegetable particles) still contains at least 50% (wt) of the water, based on its fresh form.

The composition prepared according to the invention may further comprise one or more of: flavours, preservatives, colorants, acids. Regarding acids, in particular organic acids such as citric acid is preferred to reduce the pH, thereby increasing microbial stability. Preferably the pH is below 5, more preferably below 4.5.

In an alternative method, vegetable matter may be used which is already cut or sliced into particles.

In yet another alternative method, vegetable particles may be utilised in the process according to the invention of which part of the water content is already removed prior to mixing with salt, e.g. the amount of water removed may be 0.1-60% of the fresh weight of the vegetable particles and salt together. As an example, vegetables may be used that are pre-dried to some extent. Preferably, the amount of water that is not removed (i.e. remaining in the vegetable particles) is such that the particles still have a fresh appearance upon usage.

### EXAMPLES

### Onions pre-treatment

Fresh onions were diced to an approx. size of 5x5x7 mm, and mixed (for 3 minutes) with salt, citric acid and sodium bisulphite in the following amounts:

| | |
|---|---|
| Onions dices | 79.18 |
| Salt | 20 |
| Citric acid | 0.8 |
| Na Bisulphite | 0.02 |
| Total | 100.0 % |

On standing an aqueous layer was soon formed from the water released by the onion pieces. After 24 hours 25 - 30% on total weight of liquid was removed by centrifugation. At that time equilibrium was present between salt, acid and the like in the liberated free water and in the water present in or adhering to the onion pieces. So-prepared onion particles were used as partly de-hydrated onion pieces in the preparation of compositions 1-3 below, which compositions were suitable as a simmering base or mixture for preparing meals.

**Composition 1**

| | |
|---|---|
| Fat base | 25 |
| - Soy bean oil | 94.9% |
| - RPh 70 | 5.0 % |
| - Lecithin | 0.1% |
| | |
| Onions, pre-treated as above | 60 |
| Salt | 12 |
| Flavouring ingredients, onion, garlic. | 3 |

**Composition 2**

| | |
|---|---|
| Fat base | 25 |
| - Soy bean oil | 94.9% |
| - RPh 70 | 5.0 % |
| - Lecithin | 0.1% |
| | |
| Onions, pre-treated as above | 60 |
| Salt | 6 |
| Sugar | 6 |
| Flavouring ingredients, onion, garlic. | 3 |

**Composition 3**

| | |
|---|---|
| Fat base | 37 |
| - Soy bean oil | 94.9% |
| - RPh 70 | 5.0 % |
| - Lecithin | 0.1% |
| | |
| Onions pre-treated as above | 48 |
| Salt | 6 |
| Sugar | 6 |
| Flavouring ingredients, onion, garlic | 3 |

All compositions as prepared above did show less water separation than 5% (vol/vol) when laft for storage at ambient conditions for 6 weeks.

## Claims

1. Process for preparing an edible composition comprising vegetable matter, a fat phase and salt, which process comprises the following steps:
- cutting vegetable matter into slices, dices or other particulate form,
- adding part or all of the salt optionally followed by mixing,
- removing part or all of the water liberated,
- mixing the so-obtained salted vegetable matter with the fat phase,
wherein the amount of water removed is 0.1-60% based on the vegetable particles/salt mixture.

2. Process according to claim 1, wherein the composition so-prepared shows water separation of less than 5%, preferably less than 3% (vol/vol) water when stored for 6 weeks under ambient conditions.

3. Process according to claim 1-2, wherein the amount of the fat phase is 10-60 % (wt).

4. Process according to claim 1-3, wherein the amount of vegetable matter is 35-85 % (wt).

5. Process according to claim 1-4, wherein the amount of salt is 0.05-40 % (wt), preferably 2-25% (wt).

6. Process according to claim 1-5, wherein the removal of the water is achieved by centrifugation.

7. Process according to claim 1-6, wherein fat phase comprises a liquid oil and 0.1-20% of a solid fat (at room teraperature).

8. Process according to claim 7, wherein the amount of solid fat is 1-10% (wt), based on the total amount of fat phase.

9. Process according to claim 1-8, wherein the vegetable matter comprises at least 50% by weight of onions or other member of the botanical genus Allium.

10. Process according to claim 1-9, further comprising a pasteurisation or sterilisation treatment.

## Patentansprüche

1. Verfahren zum Herstellen einer essbaren Zusammensetzung, umfassend Pflanzenmaterial, eine Fettphase und Salz, welches Verfahren die folgenden Schritte umfasst:
- Schneiden von Pflanzenmaterial in Scheiben, Würfel oder andere partikuläre Form,
- Zugeben des Salzes zum Teil oder zur Gänze, gegebenenfalls gefolgt von Mischen,
- Entfernen des freigesetzten Wassers zum Teil oder zur Gänze,
- Mischen des so erhaltenen gesalzenen Pflanzenmaterials mit der Fettphase,
worin die Menge an entferntem Wasser 0,1-60 % beträgt, basierend auf dem Pflanzenteilchen/Salz-Gemisch.

2. Verfahren gemäß Anspruch 1, worin die so hergestellte Zusammensetzung eine Wasserabscheidung von weniger als 5 %, vorzugsweise weniger als 3 % (Vol./Vol.) Wasser zeigt, wenn sie für 6 Wochen unter Umgebungsbedingungen gelagert wird.

3. Verfahren gemäß Anspruch 1-2, worin die Menge der Fettphase 10-60 % (Gew.) beträgt.

4. Verfahren gemäß Anspruch 1-3, worin die Menge an Pflanzenmaterial 35-85 % (Gew.) beträgt.

5. Verfahren gemäß Anspruch 1-4, worin die Menge an Salz 0,05-40 % (Gew.), vorzugsweise 2-25 % (Gew.) beträgt.

6. Verfahren gemäß Anspruch 1-5, worin die Entfernung des Wassers durch Zentrifugation erreicht wird.

7. Verfahren gemäß Anspruch 1-6, worin Fettphase ein flüssiges Öl und 0,1-20 % eines festen Fetts (bei Raumtemperatur) umfasst.

8. Verfahren gemäß Anspruch 7, worin die Menge an festem Fett 1-10 % (Gew.) beträgt, basierend auf der Gesamtmenge an Fettphase.

9. Verfahren gemäß Anspruch 1-8, worin das Pflanzenmaterial mindestens 50 % nach Gewicht an Zwiebeln oder anderem Mitglied der botanischen Gattung Allium umfasst.

10. Verfahren gemäß Anspruch 1-9, welches ferner eine Pasteurisations- oder Sterilisationsbehandlung umfasst.

## Revendications

1. Procédé pour la préparation d'une composition comestible comprenant des matières végétales, une phase grasse et du sel, lequel procédé comprend les étapes suivantes :
- couper des matières végétales en tranches, en dés ou sous forme d'autres particules,
- ajouter une partie ou tout le sel facultativement suivi d'un mélange,
- retirer une partie ou toute l'eau libérée,
- mélanger les matières végétales salées ainsi obtenues avec la phase grasse,
dans lequel la quantité d'eau retirée est de 0,1 à 60 % sur la base du mélange particules végétales/sel.

2. Procédé selon la revendication 1, dans lequel la composition ainsi préparée présente une séparation d'eau de moins de 5 %, de préférence de moins de 3 % (vol/vol) d'eau lorsqu'elle est stockée pendant 6 semaines dans des conditions ambiantes.

3. Procédé selon les revendications 1 et 2, dans lequel la quantité de phase grasse est de 10 à 60 % (en poids).

4. Procédé selon les revendications 1 à 3, dans lequel la quantité de matières végétales est de 35 à 85 % (en poids).

5. Procédé selon les revendications 1 à 4, dans lequel la quantité de sel est de 0,05 à 40 % (en poids), de préférence de 2 à 25 % (en poids).

6. Procédé selon les revendications 1 à 5, dans lequel le retrait de l'eau est effectué par centrifugation.

7. Procédé selon les revendications 1 à 6, dans lequel la quantité de phase grasse comprend une huile liquide et de 0,1 à 20 % d'une graisse solide (à température ambiante).

8. Procédé selon la revendication 7, dans lequel la quantité de graisse solide est de 1 à 10 % (en poids), sur la base de la quantité totale de phase grasse.

9. Procédé selon les revendications 1 à 8, dans lequel les matières végétales comprennent au moins 50 % en poids d'oignons ou d'autre membre du genre botanique Allium.

10. Procédé selon les revendications 1 à 9, comprenant en outre un traitement de pasteurisation ou de stérilisation.
